# EUROPÄISCHE PATENTSCHRIFT

(11) **EP 0 623 454 B1**
(45) Veröffentlichungstag und Bekanntmachung des Hinweises auf die Patenterteilung: **27.01.1999**
(21) Anmeldenummer: 94105893.5
(22) Anmeldetag: 15.04.1994
(51) Int. Cl.: B29D 31/00, B31D 3/02

(54) **Verfahren und Vorrichtung zur Herstellung eines Wabenkörpers**
Method and apparatus for producing a honeycomb article
Procédé et dispositif pour la production d'un article en nid d'abeilles

(30) Priorität: 07.05.1993 DE 4315261
(43) Veröffentlichungstag der Anmeldung: 09.11.1994
(73) Patentinhaber: EURO-COMPOSITES S.A., L-6401 Echternach (LU)
(72) Erfinder: Rudbach, Michael, Dipl.-Ing., L-6834 Biwerbaach (LU)
(74) Vertreter: Bohnenberger, Johannes, Dr.

(56) Entgegenhaltungen:
- CH-A- 266 577
- GB-A- 659 075
- GB-A- 832 763
- US-A- 2 734 843
- US-A- 2 887 425
- US-A- 2 983 640
- US-A- 3 853 681

## Beschreibung

Die Erfindung betrifft ein Verfahren zur Herstellung eines Wabenkörpers nach dem Oberbegriff des Patentanspruches 1 sowie eine Vorrichtung zur Herstellung eines Wabenkörpers nach dem Oberbegriff des Patentanspruches 16.

Ein herkömmliches Verfahren ist beispielsweise aus der US-2,983,640 bekannt und wird im folgenden anhand der beiliegen den Figuren 6 - 8 beschrieben.

Bei dem dort beschriebenen Verfahren wird eine Materialbahn 11 von einer Vorratsrolle 10 abgezogen und mittels einer Druckwalze 20, die parallel zu ihrer Drehachse äquidistant über den Umfang verteilte Aufnahmebereiche 21 hat, mit gleichmäßig voneinander beabstandeten Kleber-Streifen 12 bedruckt. Die so bedruckte Bahn 11 wird in Einzelabschnitte 13, 13', 13'' zerteilt, die unter Bildung eines Stapels 14 aufeinandergelegt werden. Hierbei werden die Einzelabschnitte 13, 13', 13'' derart aufeinander gelegt, daß die Kleber-Streifen 12, 12' und 12'' aufeinanderfolgender Abschnitte 13, 13', 13'' auf Lücke stehen, also gegeneinander versetzt sind. Wenn man die Abschnitte 13 mit fortlaufenden Nummern versieht, so liegen also alle Kleber-Streifen 12, 12'' von Abschnitten 13, 13'' mit ungeraden Nummern ebenso senkrecht untereinander wie die Kleber-Streifen 12' von Abschnitten 13' mit geraden Nummern.

Nach dem Bilden des Stapels 14 wird der Kleber aktiviert und ausgehärtet. Danach wird der Stapel 14 expandiert, so daß sich der gewünschte Wabenkörper ergibt.

Problematisch am bekannten Verfahren ist die Bildung des Stapels. Von der Genauigkeit des Auflegens hängt die Abmessungsgenauigkeit des Wabenkörpers ab. Darüber hinaus ist die Bildung des Stapels sehr zeitraubend.

Aus der US-2,734,843 ist es bekannt, daß man das Bedrucken mit Kleber-Streifen in Förderrichtung der von der Vorratsrolle abgezogenen Warenbahn vornehmen kann, wobei der Versatz der Kleber-Streifen durch zwei unterschiedlich angeordnete Auftragseinrichtungen vorgenommen wird. Auch hier hängt aber die Genauigkeit des entstehenden Wabenkörpers davon ab, daß der Stapel mit einer entsprechenden Genauigkeit gebildet wird. Darüber hinaus treten Probleme bei der Fertigung dadurch auf, daß die mit Kleber bedruckte Warenbahn noch eine Vielzahl von Vorrichtungen, unter anderem eine Schneidevorrichtung zur Bildung der Abschnitte durchlaufen muß, bis die Abschnitte auf einen Stapel gelegt werden. Dadurch kommt es zu einer Schädigung der Kleber-Streifen.

Aus der US-3,006,798, der US-3,114,666, der DE-PS 1 123 548 und der DE-PS 1 128 274 ist es bekannt, Kleber-Streifen in einem spitzen Winkel zur Materialbahn aufzutragen. Bei einer geeigneten Anbringung von Schnitten zur Bildung der Abschnitte liegen dann die Kleber-Streifen in gewünschter Weise versetzt gegeneinander, wenn die Abschnitte deckungsgleich aufgestapelt sind. Auch bei diesem bekannten Verfahren ist es äußerst schwierig, einen Wabenkörper mit genauen und exakt reproduzierbaren Abmessungen zu fertigen.

Aus der CH-A-2665777 ist ein Verfahren und eine Vorrichtung der eingangs genannten Art bekannt. Nach der dort beschriebe Lehre wird auf einem biegsamen Blatt, z.B. aus Papier, Zellulose-Esterfilm oder einem Kunststoffilm mit ähnlichen Eigenschaften Kleber in Streifen aufgebracht. Eine Vielzahl solcher Blätter wird mit abwechselnd versetzten Kleberstreifen aufeinandergelegt. Dazu wird auf einer Platte ein erstes Kartonblatt befestigt. Auf dieses Blatt wird ein erster Satz von Streifen aus Kleber aufgebracht. Dies erfolgt mittels einer Schablone, die von einem Deckel getragen wird. Die Schablone wird auf das Blatt "geklappt". Mittels einer Walze, die über die Schablone geführt wird, wird anschließend der Kleber auf das Blatt aufgebracht. Die Schablone wird danach "aufgeklappt", so daß ein neues, zweites Blatt auf das erste Blatt gelegt werden kann.

Die Platte wird nun seitlich verschoben und die Schablone erneut auf das zweite Blatt "geklappt". So kann ein zweiter Satz von Streifen aus Kleber versetzt zu dem ersten Satz auf das zweite Blatt aufgetragen werden. Dies wird solange wiederholt, bis ein kompletter Stapel mit einer Vielzahl von aufeinandergelegten Blättern fertiggestellt ist.

Durch Einwirkung von Wärme und/oder Druck kann das Abbinden des aufgetragenen Klebers beschleunigt werden.

Gemäß der Lehre der CH-A-266577 muß also eine Schablone mit parallelen, länglichen Öffnungen vorgesehen sein, die für jedes zu beklebende Blatt "auf-" und "zugeklappt" werden muß und über die im "zugeklappten" Zustand zum Aufbringen der Kleber-Streifen eine Walze geführt wird. Sowohl die Schablone als auch die Walze müssen dabei manuell oder maschinell einmal zum Auftragen des Klebers auf ein einzelnes Blatt und zum anderen zum Verstellen der Höhe bei wachsendem Stapel in exakter Führung beweglich angeordnet sein. Diese Anordnung zum Aufbringen der Kleber-Streifen ist daher recht aufwendig.

Demgegenüber liegt der Erfindung die Aufgabe zugrunde, ein Verfahren sowie eine Vorrichtung anzugeben, mittels derer Wabenkörper in einfacher Weise mit exakten Abmessungen herstellbar sind.

Diese Aufgabe wird verfahrensmäßig durch die im Patentanspruch 1 und vorrichtungsmäßig durch die im Patentanspruch 16 angegebenen Merkmale gelöst.

Bei der Erfindung kann daher vorteilhafterweise auf eine Schablone verzichtet werden, da diese quasi in die Druckwalze "integriert" ist. Solche Druckwalzen können besonders einfach und mit großer Genauigkeit hergestellt werden. Desweiteren ist das Auftragen des Klebers mit relativ großer Geschwindigkeit möglich.

Im Gegensatz zur Herstellung des Walzenkörpers gemäß der CH-A-266577 kann das Auftragen der Kleber-Streifen vorteilhafterweise in einem Arbeitsgang erfolgen, da bei gleichzeitiger Zuführung von Klebstoff bei Bewegung der erfindungsgemäßen Druckwalze über das oberste Blatt auf äußerst einfache Weise direkt das benötigte Muster aus Kleber-Streifen aufgetragen werden kann. Gemäß dem Stand der Technik muß zunächst die Schablone "zugeklappt", dann der Klebstoff auf die Schablone aufgetragen und anschließend die Walze über die Schablone geführt werden. Es sind daher drei unabhängige Arbeitsvorgänge notwendig.

Orientierung der Fasern im Material, so eingestellt werden kann, wie man es aufgrund der an den Wabenkörper gestellten Festigkeitsanforderungen wünscht. Die Fasern in der Materialbahn haben nämlich bekanntlich eine Vorzugsrichtung (in Abziehrichtung), wodurch wiederum eine Material-Inhomogenität in Bezug auf Festigkeitseigenschaften usw. gegeben ist.

Ein weiterer Vorteil der Erfindung liegt darin, daß man beim Aufbringen der Kleber-Streifen sehr flexibel hinsichtlich der benutzbaren Werkzeuge bzw. Verfahren ist. Insbesondere können nicht nur kontinuierliche sondern auch diskontinuierliche Verfahren sehr leicht angewendet werden.

Die Exaktheit des Aufstapelvorgangs hat bei Anwendung der Erfindung keine Auswirkung auf die Exaktheit des herzustellenden Wabenkörpers. Diese hängt lediglich von der Exaktheit bei der Aufbringung der Kleber-Streifen ab, so daß nur dieser eine Parameter zu berücksichtigen ist und eine Summierung von Fehlern nicht auftritt. Dies wird insbesondere dann bedeutsam, wenn sehr große Wabenkörper mit relativ dazu gesehen sehr kleinen Waben gebildet werden, was aus Fertigungstechnischen Gründen bevorzugt wird.

Ein weiterer Vorteil der Erfindung liegt darin, daß man den Verklebevorgang für jeden Abschnitt direkt nach dem Aufbringen der Kleber-Streifen vornehmen kann. Dadurch kann auch bei sehr geringen Klebermengen eine exakte und fehlerfreie Klebung sichergestellt werden. Darüber hinaus können auch Klebstoffe verwendet werden, welche nur Schicht für Schicht aktivierbar sind.

Nachdem bisher die mit den Kleber-Streifen versehenen Abschnitte aufgestapelt wurden, konnten nur solche Klebstoffe verwendet werden, die sehr schnell nach dem Auftragen "wischfest" sind. Beispielsweise konnten bisher Dispersionskleber praktisch nicht verwendet werden. Dispersionskleber sind aber erheblich kostengünstiger und auch aus Gründen des Umweltschutzes und/oder aus Gründen der besseren gesundheitlichen Verträglichkeit gewünscht. Man mußte also sehr sorgfältig darauf achten, daß kein "Verschmieren" der Kleber-Streifen auftrat. Mit der vorliegenden Erfindung ist dieses Problem gänzlich behoben.

Vorzugsweise werden in einem Arbeitsgang mit dem Aufbringen der Kleber-Streifen auf den obersten Abschnitt die Kleber-Steifen der darunterliegenden Abschnitte aktiviert, so daß der Stapel, auf den ein Abschnitt aufgelegt wird, aus lauter miteinander verklebten Abschnitten besteht. Dadurch ist gewährleistet, daß ein Verrutschen der einzelnen Abschnitte gegeneinander nicht geschehen kann. Dies ist insbesondere dann gegeben, wenn dieser Aktivierungsvorgang direkt vor dem Aufbringen der Kleber-Streifen auf den obersten Abschnitt erfolgt.

Vorzugsweise entfernt man im wesentlichen unmittelbar vor dem Aufbringen der Kleber-Steifen Luftpolster zwischen den darunterliegenden Abschnitten. Insbesondere werden die Luftpolster unter dem obersten Abschnitt entfernt. Dadurch, daß sich keine Luft zwischen den einzelnen Abschnitten befindet, kann man eine größere Packungsdichte erzielen. Diese wiederum führt zu einem festeren Stapel, der ein genaueres Expandieren ermöglicht. Der bisher übliche "Dickenschwund" von ca. 15 % wird also wesentlich reduziert, wobei gleichzeitig die Genauigkeit des entstehenden Wabenkörpers erhöht wird.

Das Entfernen der Luftpolster kann in einfacher Weise durch eine Anpreßrolle geschehen, welche über den obersten Abschnitt geführt wird.

Die Versetzung der Streifen gegeneinander (von Abschnitt zu Abschnitt) kann durch ein Versetzen des Stapels (nach dem Auflegen des obersten Abschnittes) gegenüber der Kleber-Auftragsvorrichtung tragsvorrichtung oder umgekehrt durchgeführt werden. Beide Verfahren haben ihre Vorteile. Trägt man die Kleber-streifen durch eine Druckwalze oder durch einzelne Spritzdüsen auf, so daß die Auftragseinrichtung zum Auftragen des Klebers entlang der Kleber-streifen über den jeweils obersten Abschnitt geführt wird, so kann man bei Bewegung des Stapels zur Erzielung des Versatzes eine einfachere Führung der Auftragseinrichtung (Beweglichkeit nur in einer Achse) verwenden. Stellt man andererseits sehr hohe Stapel her, so muß man relativ große Massen bewegen. Dann, wenn die Auftragseinrichtung demgegenüber eine wesentlich geringere Masse hat, kann es günstiger sein, die Auftragseinrichtung zur Erzielung des Versatzes in einer Richtung senkrecht zu den Kleber-streifen zu bewegen.

In allen Fällen geht man vorzugsweise so vor, daß die Abschnitte randbündig aufeinanderliegen. Dadurch kann eine erhebliche Materialersparnis erzielt werden. Hierzu ist es von Vorteil, wenn der Stapel seitlich gehalten wird.

Zum Auftragen des Klebers kann man entweder die Auftragseinrichtung gegenüber dem Stapel oder aber den Stapel gegenüber der Auftragseinrichtung bewegen. Beide Möglichkeiten haben aus den bereits oben erwähnten Gründen Ihre Vorteile. Man wird aber insbesondere dann den Stapel gegenüber einer stillstehenden Auftragseinrichtung bewegen, wenn man die Abschnitte abwechselnd von zwei Vorratsrollen abzieht, so daß man den Stapel von einer Vorratsrolle unter der Auftragseinrichtung vorbei zur anderen Vorratsrolle und wieder zurück führen kann.

Vorzugsweise wird der Kleber durch Bewegung der Auftragseinrichtung relativ zum Stapel in Richtung der Kleber-Streifen aufgetragen, wie dies (für eine Materialbahn vor bilden der Abschnitte) aus der US-2,734,843 im Prinzip bekannt ist. Es wird mit einer Druckwalze gearbeitet, welche Aufnahmebereiche für den Kleber in Umfangsrichtung aufweist. Die Herstellung derartiger Druckwalzen ist besonders einfach.

Auch beim Aufspritzen des Klebers oder Auftragen des Klebers durch elektrostatische Übertragung ist es von Vorteil, wenn die Auftragseinrichtung relativ zum Stapel entlang der Kleber-Streifen bewegt wird, da in diesem Fall ein kontinuierlicher Fluß des Klebematerials mit geringen Genauigkeitsanforderungen bezüglich der zeitlichen Steuerung möglich ist.

Die erfindungsgemäße Vorrichtung unterscheidet sich von den bekannten Vorrichtungen in erster Linie dadurch, daß eine Relativbeweglichkeit zwischen dem Stapel und der Auftragseinrichtung gewährleistet ist, um den Versatz zwischen den Klebe-Streifen von Abschnitt zu Abschnitt herzustellen.

Alternativ ist es auch möglich, abwechselnd mit verschiedenen Auftragseinrichtungen zu arbeiten, welche die Kleber-Streifen versetzt gegeneinander auftragen. In jedem Fall ist es jedoch von Bedeutung, daß der Auftrag der Klebestreifen auf dem Stapel vorgenommen wird.

Vorzugsweise ist eine Aktivierungseinrichtung vorgesehen, die derart ausgebildet und beim Stapel angebracht ist, daß der Kleber zwischen dem obersten und (mindestens) dem darunterliegenden Abschnitt aktiviert werden kann, so daß die Verklebung der Abschnitte miteinander jedesmal nach Auflegen eines neuen Abschnittes erfolgt. Vorzugsweise geschieht dies in einem Arbeitsgang mit dem Aufbringen der Kleber-Streifen auf den obersten Abschnitt, wodurch Zeit gespart werden kann.

Weiterhin ist eine Einrichtung vorgesehen, welche nach auflegen eines Abschnittes (oder einer kleinen Gruppe von Abschnitten) Luftpolster zwischen den Abschnitten entfernt. Auch dies kann im wesentlichen gleichzeitig mit dem Aufbringen der Kleber-Streifen (und dem Aktivieren des Klebers) geschehen.

Die Auftragseinrichtung zum Aufbringen der Kleber-Streifen ist vorzugsweise derart verstellbar ausgebildet, daß die Breite der Kleber-Streifen und/oder ihr Abstand voneinander einstellbar ist. Während nämlich bisher je nach herzustellenden Wabendimensionen gesonderte Druckwalzen hergestellt werden mußten, ist es bei dieser Ausführungsform der Erfindung möglich, die Produktion sehr schnell und kostengünstig umzustellen.

Bei der Druckwalze ist es von Vorteil, wenn diese - entgegen den bisher meist verwendeten Druckwalzen - die Aufnahmebereiche für den Kleber in Umfangsrichtung aufweist und die Aufnahmebereiche durch Walzenabschnitte voneinander getrennt sind, welche keinen Kleber auf das Material übertragen können. Derart ausgestaltete Druckwalzen sind relativ leicht herstellbar und können auch den Kleberauftrag mit relativ großer Geschwindigkeit vornehmen, da eine im Wesentlichen kontinuierliche Kleber-Übertragung stattfindet. Vorzugsweise sind die Walzenabschnitte auswechselbar ausgestaltet, so daß man je nach Länge des verwendeten Walzenabschnitts verschieden große Abstände zwischen den Kleber-Streifen einstellen kann.

Die Aufnahmebereiche sind in ihre Breite ebenfalls vorzugsweise veränderbar, so daß man die Breite der Kleber-Steifen je nach Bedarf einstellen kann. Dies kann beispielsweise dadurch gewährleistet werden, daß man auswechselbare Distanzstücke zwischen den Walzenabschnitten vorsieht, welche einen etwas geringeren Durchmesser und eine rauhere Oberfläche aufweisen als die Walzenabschnitte, um die Aufnahmebereiche zu bilden. Die Distanzstücke sind dann ebenfalls auswechselbar ausgestaltet.

Bevorzugte Ausführungsformen der Erfindung ergeben sich aus den Unteransprüchen.

Nachfolgend werden Ausführungsbeispiele der Erfindung anhand von Abbildungen näher erläutert. Hierbei zeigt:
- Fig. 1: eine schematisierte Draufsicht auf eine erste bevorzugte Ausführungsform der Erfindung,
- Fig. 2: eine Ansicht entlang der Linie II - II aus Fig. 1 (ohne Darstellung der Walzen),
- Fig. 3: eine schematisierte Draufsicht ähnlich der nach Fig. 1 auf eine weitere bevorzugte Ausführungsform der Erfindung,
- Fig. 4: einen Teil-Schnitt durch eine bevorzugte Ausführungsform einer Druckwalze,
- Fig. 5: eine Teil-Ansicht einer Auftragseinrichtung,
- Fig. 6: eine Draufsicht auf eine bekannte Vorrichtung,
- Fig. 7: eine schematisierte Draufsicht auf einen Stapel, der mit der bekannten Vorrichtung nach Fig. 6 hergestellt ist, und
- Fig. 8: eine schematisierte Seitenansicht von drei übereinanderliegenden Abschnitten mit aufgetragenen Kleber-Streifen.

In den Abbildungen sind für gleiche oder gleichwirkende Teile die selben Bezugsziffern verwendet.

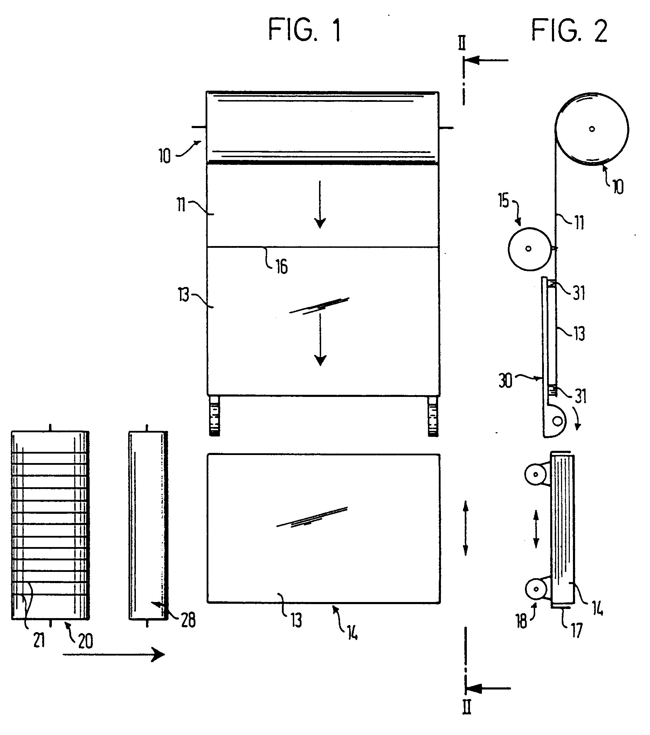

Bei der in den Figuren 1 und 2 gezeigten Ausführungsformen der Erfindung ist eine Vorratsrolle 10 vorgesehen, von welcher eine Materialbahn 11 in Pfeilrichtung abgezogen wird. Von der Materialbahn 11 werden mittels einer Schneidevorrichtung 15 Schnittlinien 16 gebildet, so daß Abschnitte 13 entstehen. Die Schneidevorrichtung 15 ist hiebei mit einer (nicht gezeigten) Vorrichtung zum Abziehen der Materialbahn von der Vorratsrolle 10 gekoppelt, so daß alle Abschnitte 13 die gleiche Länge aufweisen.

Weiterhin ist eine Auflegevorrichtung 30 vorgesehen, welche abgetrennte Abschnitte 13 mittels Saughaltern 31 festhält und unter Wenden (siehe Pfeil in Fig. 2) auf einen Stapelhalter 17 bzw. den dort bereits entstandenen Stapel 14 auflegt. Der Stapel 14 bzw. der Stapelhalter 17 ist mittels einer Verschiebeeinrichtung 18 (die der Einfachheit halber hier lediglich als Rollenführung angedeutet ist) in Richtung des Doppelpfeils in den Figuren 1 und 2 (gesteuert) beweglich.

Weiterhin ist eine Druckwalze 20 vorgesehen, welche in Umfangsrichtung Aufnahmebereiche 21 aufweist. Diese Aufnahmebereiche 21 sind derart ausgebildet, daß aus einer (nicht gezeigten) Kleber-Zuführungseinrichtung Kleber in den Aufnahmebereichen 21 jedoch nicht zwischen diesen aufgenommen werden kann.

Schließlich ist noch eine Andruckwalze 28 vorgesehen, welche ebenso wie die Druckwalze 20 in Richtung des in Fig. 1 von links nach rechts laufenden Pfeiles bewegbar ist.

Nachfolgend wird das Verfahren bei der Bildung eines Stapels beschrieben.

Zunächst wird eine, der Länge des Abschnittes 13 entsprechende Materialmenge von der Vorratsrolle 10 abgezogen und mittels der Schneidevorrichtung 15 abgetrennt. Der so entstehende Abschnitt 13 wird dann mittels der Auflagevorrichtung 30 (unter Wenden) auf den Stapelhalter 17 aufgelegt. Dann fährt die Andruckwalze 28 zusammen mit der Druckwalze 20 (in Fig. 1 von links nach rechts) über diesen Abschnitt 13 und versieht dessen Oberfläche mit einem Muster aus zueinander parallelen Klebestreifen.

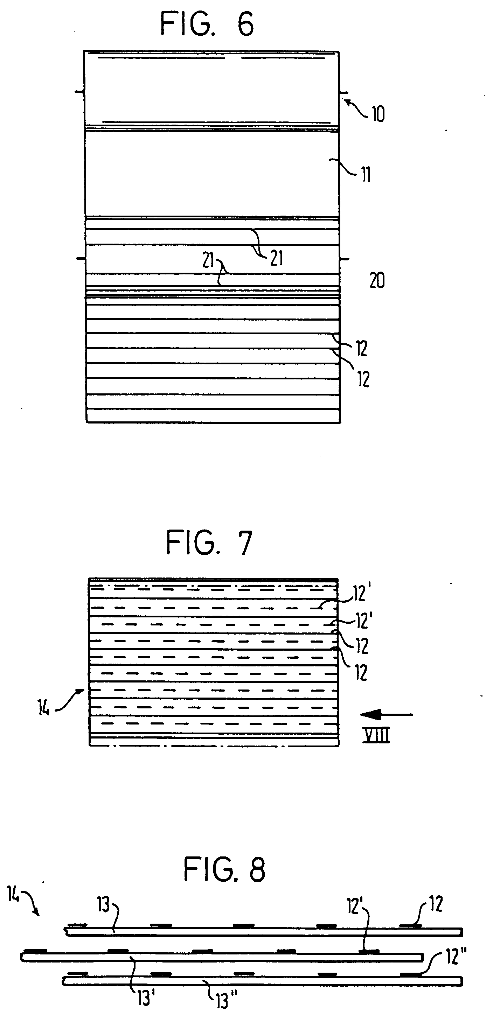

Nach jedem Auflegen eines Abschnittes 13 wird der Stapel 14 mittels der Verschiebeeinrichtung 18 um eine Distanz vor bzw. zurück (in den Figuren 1 und 2 nach oben bzw. nach unten) verschoben, welche dem halben Abstand zwischen zwei Aufnahmebereichen 21 bzw. Kleber-Streifen 12 entspricht. Durch dieses hin- und herbewegen des Stapels 14 wird das in Fig. 8 eingangserläuterte, zur Herstellung von Waben notwendige Muster (Versatz) erzeugt.

Unter Abheben fahren die Druckwalze 20 und die Andruckwalze 28 in ihrer in Fig. 1 gezeigte Position zurück. Sodann wird der nächste Abschnitt 13 abgetrennt und auf den ersten Abschnitt 13, der sich auf dem Stapelhalter 17 befindet, aufgelegt. Die Andruckwalze 28 und die Druckwalze 20 fahren dann wieder über diesen obersten Abschnitt 13, wobei die Andruckwalze 28 Luftpolster zwischen den beiden Abschnitten vor sich her aus dem Stapel herausdrückt. Gleichzeitig wird hierbei der Kleber "aktiviert", was beispielsweise bei einem Schmelzkleber oder auch bei einem Dispersionskleber dadurch geschehen kann, daß neben einem (im wesentlichen linienförmigen) über den Stapel 14 wandernden Anpreßdruck zusätzlich Wärme zugeführt wird. Dies kann beispielsweise dadurch geschehen, daß man die Andruckwalze 28 (oder eine gesonderte Walze) beheizt oder aber auch Strahlungswärme anwendet. Somit wächst der Stapel 14 nach und nach, wobei im wesentlichen gleichzeitig mit dem Bedrucken ein Verkleben des jeweils obersten Abschnitts mit dem darunterliegenden Abschnitt ohne dazwischenliegende Luftpolster stattfindet. Der so entstehende Stapel 14 ist somit äußerst kompakt.

Schließlich wird in an sich bekannter Weise der Stapel 14 expandiert, mit Harz getränkt und ausgehärtet, wenn dies der Materialbahn 11 entspricht. Selbstverständlich kann hier auch Metall (z. B. Aluminium) verarbeitet werden.

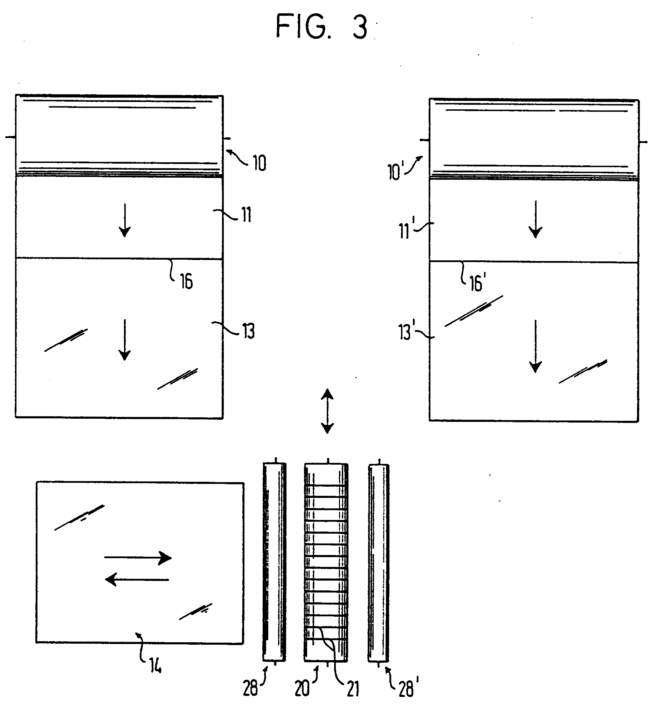

Bei der in Fig. 3 schematisiert dargestellten Ausführungsform der Erfindung sind zwei Vorratsrollen 10, 10' vorgesehen, von welchen jeweils eine Materialbahn 11, 11' abgezogen und, von ihr durch Schnittlinien 16, 16' getrennt, Abschnitte 13, 13' hergestellt werden.

Die (auch hier als Druckwalze dargestellte) Auftragseinrichtung 20 ist lediglich in Richtung des Doppelpfeils in Fig. 3, also in Förderrichtung (siehe Pfeile) der Materialbahn 11 beweglich und zwar um einen Betrag, der wieder der Hälfte des Abstandes zwischen zwei Aufnahmebereichen 21 entspricht.

Vor und hinter der Druckwalze 20 ist jeweils eine Andruckwalze 28, 28' vorgesehen. Die Druckwalze 20 ist derart ausgebildet, daß sie in beiden Richtungen drehen kann.

Bei dieser Ausführungsform der Erfindung wird nun wechselweise von der Vorratsrolle 10 und von der Vorratsrolle 10' Material abgezogen, so daß (nach Auflegen eines Materialabschnitts 13 auf den Stapel 14) der Stapel 14 unter den Andruckwalzen 28 und der Druckwalze 20 hindurchfährt und dabei mit den Kleber-Streifen versehen wird. Danach werden ein Abschnitt 13' auf den Stapel 14 aufgelegt, die Druckwalze 20 um den definierten Betrag einer halben Streifen-Abstandsbreite verschoben und der Stapel 14 wieder zurück in die in Fig. 3 gezeigte Position gefahren, wobei wieder das Muster von Kleber-Streifen auf dem obersten Abschnitt gebildet und die Verklebung zwischen dem obersten Abschnitt 13 und dem darunterliegenden Abschnitt 13' (siehe Fig. 8) sichergestellt werden. Dann wird die Druckwalze 20 wieder zurück in ihre in Fig. 3 gezeigte Position gefahren und der Vorgang beginnt von neuem, bis der Stapel die gewünschte Höhe erreicht hat.

Wie eingangs erläutert gibt es verschiedene Möglichkeiten, den Kleber aufzutragen.

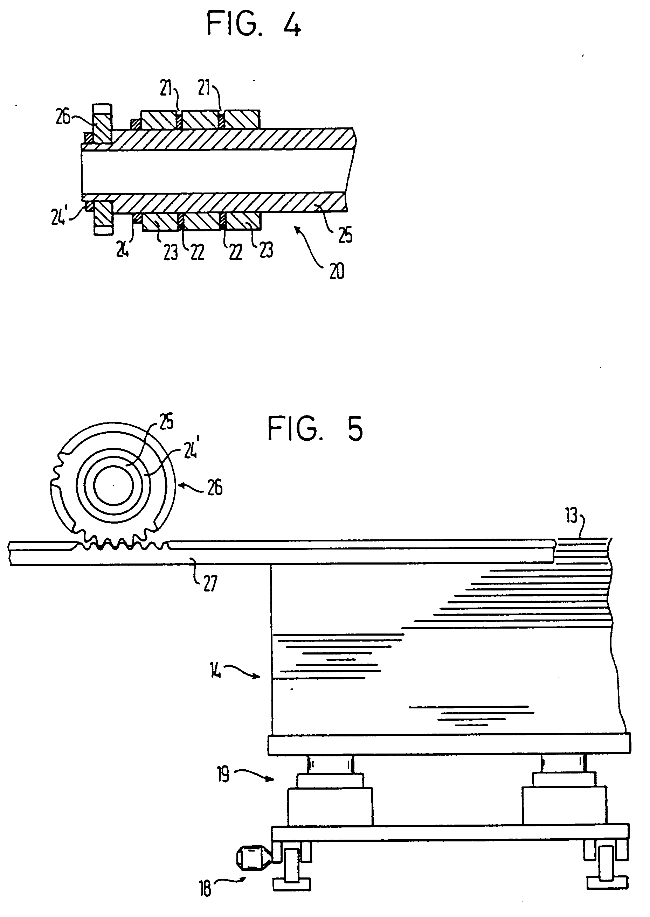

Verwendet man eine Druckwalze, wie in den Ausführungsbeispielen gemäß Fig. 1 bis 3 gezeigt, so ist es von Vorteil, eine Druckwalze zu verwenden, wie sie in Fig. 4 angedeutet ist.

Die dort gezeigte Druckwalze 20 umfaßt einen (aus Gewichtsersparnisgründen hohlen) Kern 25, auf welchem Walzenabschnitte 23 mit einer glatten Oberfläche und einem bestimmten Außendurchmesser abwechselnd mit Distanzstücken 22 angebracht sind, welche einen etwas geringeren Durchmesser als die Walzenabschnitte 23 und eine zur Aufnahme von Kleber geeignete rauhe Oberfläche aufweisen. Gegebenenfalls können die Distanzstücke 22 auch aus einem für die Aufnahme von Kleber geeigneten Material gefertigt sein, das sich vom Material der Walzenabschnitte 23 unterscheidet. Dadurch werden die erläuterten Aufnahmebereiche 21 gebildet.

Die so auf dem Kern 25 abwechselnd angeordneten Distanzstücke 22 und Walzenabschnitte 23 werden auf dem Kern 25 mittels endseitiger Befestigungsringe 24 dreh- und verschließfest gehalten.

An mindestens einem Ende ist auf dem Kern 25 ein Antriebszahnrad 26 mittels eines Befestigungsringes 24' drehfest angebracht, so daß sich bei Drehung des Zahnrades 26 der Kern 25 mitsamt den darauf sitzenden Distanzstücken 22 und Walzenabschnitten 23 dreht.

Gemäß der vorliegenden Erfindung wird die Druckwalze 20 derart synchron zu Ihrer Bewegung über den Stapel 14 bzw. den darauf liegenden obersten Abschnitt 13 gedreht, daß keine Relativbewegung zwischen der Außenumfangsfläche der Walzenabschnitte 23 und dem darunterliegenden, mit Kleber zu versehenden Abschnitt 13 entstehen kann. Dies kann beispielsweise mittels der in Fig. 5 angedeuteten Anordnung geschehen.

Diese Anordnung umfaßt eine Zahnstange 27, welche mit dem Zahnkranz des Zahnrades kämmt. Der Wälzkreis des Antriebszahnrades 26 ist hierbei derart dimensioniert, daß die oben erwähnte Identität zwischen Umfangsgeschwindigkeit der Druckwalze 20 und dem obersten Abschnitt 13 auf dem Stapel 14 gewährleistet ist.

Man kann entweder die gesamte Kleber-Auftragseinrichtung mit Anwachsen des Stapels 14 anheben oder aber den Stapel 14 mittels einer Hubeinrichtung 19 (siehe Fig. 5) entsprechend seiner wachsenden Höhe absenken.

Aus der obigen Erläuterung ergibt sich, daß ein wesentlicher Punkt der Erfindung darin liegt, daß man die Kleber-Streifen Abschnitt für Abschnitt direkt auf dem Stapel anbringt und dabei gleichzeitig die aufgestapelten Abschnitte fest miteinander verbindet. Dadurch kann eine erhöhte Präzision bei gleichzeitig verringertem Arbeitsaufwand sichergestellt werden.

### BEZUGSZEICHENLISTE

- 10: Vorratsrolle
- 11: Materialbahn
- 12: Kleber-Streifen
- 13: Abschnitt
- 14: Stapel
- 15: Schneidevorrichtung
- 16: Schnittlinie
- 17: Stapelhalter
- 18: Verschiebeeinrichtung
- 19: Hubeinrichtung
- 20: Druckwalze
- 21: Aufnahmebereich
- 22: Distanzstück
- 23: Walzenabschnitt
- 24: Befestigungsring
- 25: Kern
- 26: Antriebszahnrad
- 27: Zahnstange
- 28: Andruckwalze
- 30: Auflegevorrichtung
- 31: Saughalter

## Patentansprüche

1. Verfahren zur Herstellung eines Wabenkörpers, wobei
- ein Abschnitt eines Materials mittels einer Auftragseinrichtung in regelmäßigen Mustern mit Kleber-Streifen versehen wird;
- Stapel von Abschnitten des Materials gebildet werden, die derart bezüglich der Streifenmuster gegeneinander versetzt aufeinanderliegen, daß die Streifen eines unten liegenden Abschnitts jeweils zwischen den Streifen des jeweils darüberliegenden Abschnitts angeordnet sind;
- die Kleber-Streifen nach dem Auflegen eines Abschnitts auf den Stapel auf den jeweils obersten Abschnitt aufgebracht werden;
- jeweils aufeinanderliegende Abschnitte in den Bereichen der Streifen miteinander verklebt werden; und
- der Stapel zur Bildung des Wabenkörpers expandiert wird,
**dadurch gekennzeichnet,** daß
- eine Materialbahn in Abziehrichtung von einer Vorratsrolle abgezogen wird,
- daß die Abschnitte des Materials aus der Materialbahn gebildet werden, und
- daß die regelmäßigen Muster mit Kleber-Streifen durch eine Druckwalze als Auftragseinrichtung aufgebracht werden, die Aufnahmebereiche für den Kleber in Umfangsrichtung der Druckwalze aufweist.

2. Verfahren nach Anspruch 1,
dadurch gekennzeichnet,
daß in einem Arbeitsgang mit dem Aufbringen der Kleberstreifen auf den obersten Abschnitt die Kleber-Streifen mindestens des direkt darunterliegenden Abschnittes aktiviert werden.

3. Verfahren nach Anspruch 2,
dadurch gekennzeichnet,
daß das Aktivieren direkt vor dem Aufbringen der Kleber-Streifen erfolgt.

4. Verfahren nach einem der vorhergehenden Ansprüche,
dadurch gekennzeichnet,
daß im wesentlichen unmittelbar vor dem Aufbringen der Kleber-Streifen Luftpolster mindestens unter dem obersten Abschnitt entfernt werden.

5. Verfahren nach Anspruch 4,
dadurch gekennzeichnet,
daß die Luftpolster durch eine Anpreßrolle, welche über den obersten Abschnitt geführt wird, entfernt werden.

6. Verfahren nach einem der vorhergehenden Ansprüche,
dadurch gekennzeichnet,
daß die Versetzung der Streifen durch Versetzung der Auftragseinrichtung durchgeführt wird.

7. Verfahren nach einem der Ansprüche 1 bis 5,
dadurch gekennzeichnet,
daß die Versetzung der Streifen durch Versetzen des Stapels durchgeführt wird.

8. Verfahren nach einem der vorhergehenden Ansprüche,
dadurch gekennzeichnet,
daß die Abschnitte randbündig aufeinandergelegt werden.

9. Verfahren nach Anspruch 8,
dadurch gekennzeichnet,
daß der Stapel seitlich gehalten wird.

10. Verfahren nach einem der vorhergehenden Ansprüche,
dadurch gekennzeichnet,
daß die Auftragseinrichtung zum Auftragen den Klebers über den im wesentlichen stehenden Stapel bewegt wird.

11. Verfahren nach einem der Ansprüche 1 bis 9,
dadurch gekennzeichnet,
daß der Stapel zum Auftragen des Klebers gegenüber der im wesentlichen stillstehenden Auftragseinrichtung bewegt wird.

12. Verfahren nach einem der vorhergehenden Ansprüche,
dadurch gekennzeichnet,
daß der Kleber durch Bewegung der Auftragseinrichtung relativ zum Stapel in Richtung der Kleber-Streifen aufgetragen wird.

13. Verfahren nach einem der vorhergehenden Ansprüche,
dadurch gekennzeichnet,
daß der Kleber durch eine Druckwalze aufgebracht wird.

14. Verfahren nach Anspruch 12,
dadurch gekennzeichnet,
daß der Kleber aufgespritzt wird.

15. Verfahren nach einem der Ansprüche 12 oder 14,
dadurch gekennzeichnet,
daß der Kleber durch elektrostatische Übertragung aufgebracht wird.

16. Vorrichtung zur Herstellung eines Wabenkörpers, umfassend
- eine Auftragseinrichtung (20) zum Auftragen von Mustern aus Kleber-Streifen (12) auf einen Abschnitt (13) eines Materials und
- eine Auflegevorrichtung (30) zum Bilden eines Stapels (14) von Abschnitten (13), die derart bezüglich der Kleber-Streifen-Muster gegeneinander versetzt aufeinander liegen, daß die Kleber-Streifen (12') eines unten liegenden Abschnitts (13') zwischen den Streifen (12) des jeweils darüberliegenden Abschnitts (13) angeordnet sind, so daß nach einem Klebevorgang der Stapel (14) zu einem Wabenkörper expandierbar ist,
wobei die Auftragseinrichtung (20) derart im Bereich des Stapels (14) angeordnet ist, daß die Kleber-Streifen (12) nach dem Auflegen eines Abschnitts (13) auf den Stapel (14) auf den jeweils obersten Abschnitt (13) aufgetragen werden können und vorzugsweise die Position der Auftragseinrichtung (20) relativ zum Stapel (14) in einer Richtung senkrecht zu den Kleber-Streifen (12) zur Einstellung der versetzten Anordnung der Kleber-Streifen (12) definiert veränderbar ist,
**dadurch gekennzeichnet,** daß
- eine Schneidevorrichtung (15) zum Abtrennen der Abschnitte (13) aus einer Materialbahn (11) vorgesehen ist und
- die Auftragseinrichtung (20) eine Druckwalze ist, die Aufnahmebereiche (21) für den Kleber in Umfangsrichtung der Druckwalze (20) aufweist.

17. Vorrichtung nach Anspruch 16,
dadurch gekennzeichnet,
daß eine Aktivierungseinrichtung (28) vorgesehen und derart beim Stapel (14) angebracht ist, daß in einem Arbeitsgang mit dem Aufbringen der Kleber-Streifen (12) auf den obersten Abschnitt (13) die Kleber-Streifen (12', 12'') der darunterliegenden Abschnitte (13', 13'') aktivierbar sind.

18. Vorrichtung nach einem der Ansprüche 16 oder 17,
gekennzeichnet durch
eine Einrichtung (28) die derart auf den Stapel (14) aufsetzbar und unter Druck vorzugsweise über diesen hinwegführbar ist, das Luftpolster zwischen den Abschnitten (13, 13', 13'') entfernbar sind.

19. Vorrichtung nach einem der Ansprüche 16 bis 18,
dadurch gekennzeichnet,
daß die Auftragseinrichtung (20) derart verstellbar ausgebildet ist, daß die Breite der Kleber-Streifen (12) und/oder ihr Abstand voneinander einstellbar ist.

20. Vorrichtung nach Anspruch 19,
dadurch gekennzeichnet,
daß die Auftragseinrichtung eine Druckwalze (20) umfaßt, die Aufnahmebereich (21) in Umfangsrichtung der Druckwalze (20) und diese trennende Walzenabschnitte (23) umfaßt, wobei die Walzenabschnitte (23) vorzugsweise auswechselbar sind.

21. Vorrichtung nach Anspruch 20,
dadurch gekennzeichnet,
daß zur Bereitstellung der Aufnahmebereiche (21) vorzugsweise auswechselbare Distanzstücke (22) zwischen den Walzenabschnitten (23) vorgesehen sind.

## Claims

1. A method for manufacturing a honeycomb element,
- a section of a material being provided by means of an application device with adhesive strips in regular patterns;
- stacks of sections of the material being formed, which are laid on top of one another offset relative to one another in relation to the strip patterns so that the strips of an underlying section are arranged between the strips of the respective overlying section in each case;
- after laying a section onto the stack, the adhesive strips are applied to the respective uppermost section;
- respective superimposed sections are bonded together in the region of the strips; and
- the stack is expanded to form a honeycomb element,
characterised in that
- a material web is withdrawn in the direction of withdrawal from a supply roll,
- the sections of the material are formed from the material web, and
- the regular patterns with adhesive strips are applied by a pressure roller as application device, which comprises receiving regions for the adhesive in the circumferential direction of the pressure roller.

2. A method according to claim 1, characterised in that, in a single working step with the application of the adhesive strips to the uppermost section, the adhesive strips at least of the directly underlying section are activated.

3. A method according to claim 2, characterised in that the activation is effected directly prior to the application of the adhesive strips.

4. A method according to one of the preceding claims, characterised in that substantially immediately prior to the application of the adhesive strips, air cushions are removed at least from beneath the uppermost section.

5. A method according to claim 4, characterised in that the air cushions are removed by means of a pressure roller, which is guided over the uppermost section.

6. A method according to one of the preceding claims, characterised in that the offsetting of the strips is effected by offsetting the application device.

7. A method according to one of claims 1 to 5, characterised in that the offsetting of the strips is effected by offsetting the stack.

8. A method according to one of the preceding claims, characterised in that the sections are overlaid with their edges flush.

9. A method according to claim 8, characterised in that the stack is held laterally.

10. A method according to one of the preceding claims, characterised in that the application device is displaced over the substantially stationary stack for the application of the adhesive.

11. A method according to one of claims 1 to 9, characterised in that the stack is displaced relative to the substantially stationary application device for the application of the adhesive.

12. A method according to one of the preceding claims, characterised in that the adhesive is applied by moving the application device relative to the stack in the direction of the adhesive strips.

13. A method according to one of the preceding claims, characterised in that the adhesive is applied by a pressure roller.

14. A method according to claim 12, characterised in that the adhesive is applied by spraying.

15. A method according to one of claims 12 or 14, characterised in that the adhesive is applied by electrostatic transfer.

16. A device for manufacturing a honeycomb element, comprising
- an application device (20) for applying patterns of adhesive strips (12) to a section (13) of a material and
- a laying device (30) for forming a stack (14) of sections (13), which are laid on top of one another offset relative to one another in relation to the adhesive strip patterns, so that the adhesive strips (12') of an underlying section (13') lie between the strips (12) of the respective overlying section (13), so that the stack (14) can be expanded to a honeycomb element following a bonding process, the application device (20) being arranged in the region of the stack (14) in such a manner that the adhesive strips (12) can be applied, after laying a section (13) onto the stack (14), to the respective uppermost section (13) and the position of the application device (20) is preferably variable in a defined manner relative to the stack (14) in a direction perpendicular to the adhesive strips (12) to produce the offset arrangement of the adhesive strips (12), characterised in that
- a cutting device (15) for separating the sections (13) from a material web (11) is provided and
- the application device (20) is a pressure roller, which comprises receiving regions (21) for the adhesive in the circumferential direction of the pressure roller (20).

17. A device according to claim 16, characterised in that an activating device (28) is provided and is applied to the stack (14) in such a manner that, in a single working step with the application of the adhesive strips (12) to the uppermost section (13), the adhesive strips (12', 12'') of the underlying sections (13', 13'') can be activated.

18. A device according to one of claims 16 or 17, characterised by a device (28) which can be placed onto the stack (14) and can be drawn under pressure preferably over the stack in such a manner that air cushions between the sections (13, 13', 13'') can be removed.

19. A device according to one of claims 16 to 18, characterised in that the application device (20) can be adjusted in such a manner that the width of the adhesive strips (12) and/or their distance from one another can be adjusted.

20. A device according to claim 19, characterised in that the application device comprises a pressure roller (20), which comprises receiving regions (21) in the circumferential direction of the pressure roller (20) and roller sections (23) separating the said receiving regions (21), the roller sections (23) preferably being replaceable.

21. A device according to claim 20, characterised in that spacing elements (22), which are preferably replaceable, are provided between the roller sections (23) for the preparation of the receiving regions (21).

## Revendications

1. Procédé pour la fabrication d'un article en nid d'abeilles pour lequel :
- au moyen d'un dispositif d'application, on dispose sur une section d'un matériau des bandes de colle formant des motifs réguliers ;
- qu'on forme des piles des sections du matériau qui reposent les unes au-dessus des autres, décalées les unes par rapport aux autres par rapport aux motifs des bandes de telle façon que les bandes d'une section inférieure sont disposées chaque fois entre les bandes de la section située respectivement au-dessus ;
- qu'on pose les bandes de colle, après la pose d'une section sur la pile sur chaque section supérieure ;
- qu'on colle chacune des sections reposant les unes sur les autres les unes aux autres dans les zones des bandes ; et
- qu'on expanse la pile pour former l'article en nid d'abeilles,
caractérisé en ce qu'on tire une nappe de tissu d'un rouleau de réserve dans le sens du tirage,
- qu'on forme les sections du matériau à partir de la nappe de tissu, et
- qu'on pose les motifs réguliers des bandes de colle au moyen d'un rouleau presseur en tant que dispositif d'application présentant dans la direction du périmètre du rouleau presseur des zones de réception pour la colle.

2. Procédé selon la revendication 1, caractérisé en ce que, lors d'une opération consistant à appliquer les bandes de colle sur la section supérieure, on active au moins les bandes de colle de la section immédiatement inférieure.

3. Procédé selon la revendication 2, caractérisé en ce que l'activation se fait juste avant l'application des bandes de colle.

4. Procédé selon l'une des revendications précédentes, caractérisé en ce que, essentiellement juste avant l'application des bandes de colle, des coussins d'air isolants sont éliminés au moins sous la section du dessus.

5. Procédé selon la revendication 4, caractérisé en ce que les coussins d'air isolants sont éliminés par un rouleau presseur qu'on dirige sur le dessus de la section du dessus.

6. Procédé selon l'une des revendications précédentes, caractérisé en ce que le déplacement des bandes s'effectue par le déplacement du dispositif d'application.

7. Procédé selon l'une des revendications 1 à 5, caractérisé en ce que le déplacement des bandes s'effectue par le déplacement de la pile.

8. Procédé selon l'une des revendications précédentes, caractérisé en ce que les sections sont disposées les unes au-dessus des autres, leurs bords étant alignés.

9. Procédé selon la revendication 8, caractérisé en ce que la pile est maintenue sur le côté.

10. Procédé selon l'une des revendications précédentes, caractérisé en ce que le dispositif d'application servant à appliquer la colle est déplacé par- dessus la pile essentiellement verticale.

11. Procédé selon l'une des revendications 1 à 9, caractérisé en ce que la pile, pour l'application de la colle, est déplacée face au dispositif d'application, celui-ci étant essentiellement immobile.

12. Procédé selon l'une des revendications précédentes, caractérisé en ce que la colle est appliquée par le mouvement du dispositif d'application par rapport à la pile dans la direction des bandes de colle.

13. Procédé selon l'une des revendications précédentes, caractérisé en ce que la colle est appliquée par un rouleau presseur.

14. Procédé selon la revendication 12, caractérisé en ce que la colle est appliquée au pistolet.

15. Procédé selon l'une des revendications 12 à 14, caractérisé en ce que la colle est appliquée par transmission électrostatique.

16. Dispositif pour la fabrication d'un article en nid d'abeilles comprenant :
- un dispositif d'application (20) pour appliquer des motifs de bandes de colle (12) sur un segment (13) d'un matériau et
- un dispositif de chargement pour blocs (30) pour former une pile (14) de sections (13) qui reposent les unes sur les autres, décalées les unes par rapport aux autres par rapport aux motifs de bandes de colle de telle façon que les bandes de colle (12') d'une section (13') inférieure sont disposées entre les bandes (12) de chaque section supérieure (13), si bien que, après un processus de collage, la pile (14) peut être expansée pour former un article en nid d'abeilles.
le dispositif d'application (20) étant disposé dans la zone de la pile (14) de telle sorte que les bandes de colle (12), après la pose d'une section (13) sur la pile (14), peuvent être appliquées sur chacune des sections (13) supérieures et que, de préférence, la position du dispositif d'application (20) par rapport à la pile (14), dans une direction qui est verticale aux bandes de colle (12), est modifiable de façon définie pour le réglage de la position déplacée des bandes de colle (12),
caractérisé en ce que
- un dispositif coupeur (15) est prévu pour détacher les sections (13) d'une nappe de tissu (11) et
- le dispositif d'application (20) est un rouleau presseur qui présente des zones de réception (21) pour la colle dans la direction du périmètre du rouleau presseur (20).

17. Procédé selon la revendication 16, caractérisé en ce qu'un dispositif d'activation (28) est prévu et adjoint à la pile (14) de telle sorte que, lors d'une opération consistant à appliquer les bandes de colle (12) sur la section (13) du dessus, les bandes de colle (12', 12'') des sections inférieures (13', 13'') peuvent être activées

18. Dispositif selon l'une des revendications 16 ou 17, caractérisé par un appareillage (28) que l'on peut poser sur la pile (14) et déplacer sous pression de préférence par-dessus celle-ci, de telle sorte que les coussins d'air isolants entre les sections (13,13',13'') peuvent être éliminés.

19. Dispositif selon l'une des revendications 16 à 18, caractérisé en ce que le dispositif d'application (20) est réalisé de façon à être déplaçable de telle sorte que la largeur des bandes de colle (12) et/ou leur écart les unes par rapport aux autres est réglable.

20. Dispositif selon la revendication 19, caractérisé en ce que le dispositif d'application comprend un rouleau presseur (20) qui comprend une zone de réception (21) dans la direction de la périphérie du rouleau presseur (20) et des sections de rouleau (23) séparant celui-ci, les sections de rouleau (23) étant de préférence interchangeables.

21. Dispositif selon la revendication 20, caractérisé en ce que, pour mettre à disposition les zones de réception (21), on prévoit des pièces intercalaires (22) de préférence interchangeables entre les sections de rouleau (23).
